# FASCICULE DE BREVET EUROPEEN

(11) **EP 2 188 514 B1**
(45) Date de publication et mention de la délivrance du brevet: **12.04.2017**
(21) Numéro de dépôt: 08843033.5
(22) Date de dépôt: 04.08.2008
(51) Int. Cl.: F02K 1/48

(54) **TURBOMOTEUR À ÉMISSION DE BRUIT RÉDUITE POUR AÉRONEF**
TURBOMOTOR MIT REDUZIERTER SCHALLEMISSION FÜR FLUGZEUGE
TURBOSHAFT ENGINE WITH REDUCED NOISE EMISSION FOR AIRCRAFT

(30) Priorité: 17.08.2007 FR 0705875
(43) Date de publication de la demande: 26.05.2010
(73) Titulaire: AIRBUS OPERATIONS (SAS), 31060 Toulouse (FR)
(72) Inventeur: SYLLA, Amadou, André, F-31300 Toulouse (FR); CROSTA, Franck, F-31490 Leguevin (FR); PELAGATTI, Olivier, F-31200 Toulouse (FR); PRAT, Damien, F-31770 Colomiers (FR)
(74) Mandataire: Gevers & Orès
(86) Numéro de dépôt international: PCT/FR2008/001166
(87) Numéro de publication internationale: WO 2009/053555

(56) Documents cités:
- EP-A- 1 340 901
- EP-A- 1 482 160
- EP-A- 1 703 114

## Description

La présente invention concerne un turbomoteur à émission de bruit réduite pour aéronef.

On sait que, à l'arrière d'un turbomoteur à double flux monté sur un aéronef, le flux froid supersonique, en s'écoulant vers l'aval dudit turbomoteur, entre en contact avec l'écoulement aérodynamique extérieur dudit turbomoteur. Comme les vitesses dudit flux froid et dudit écoulement sont différentes l'une de l'autre, il en résulte des cisaillements fluides de pénétration entre ceux-ci, ce qui engendre du bruit, appelé "bruit de jet" dans la technique aéronautique.

De plus, par suite d'une discontinuité de pression statique entre la pression externe et la pression à la sortie de la tuyère, ce flux froid supersonique engendre une série de cellules de compression-détente (oscillations de vitesse) agissant comme des amplificateurs de bruit et produisant un bruit dit de "cellule de choc" dans la technique aéronautique, encore appelé "shock cell noise" en langue anglaise.

Pour atténuer le bruit émis à l'arrière d'un turbomoteur à double flux, on a déjà pensé à modifier la partie arrière de la tuyère du flux froid. Par exemple, on a déjà proposé de prolonger ladite tuyère vers l'arrière par des "chevrons" (voir par exemple US 4 284 170 et US 6 360 528) ou de conformer la partie arrière de ladite tuyère en "pétales ondulés" ( voir par exemple GB 2 160 265, US 4 786 016 et US 6 082 635).

Outre le fait que ces tuyères connues exigent des conformations spéciales définitives qui, généralement, augmentent les coûts, la masse et la traînée, on doit constater que, bien qu'étant efficaces pour atténuer le bruit de jet en créant des turbulences favorisant le mélange du flux froid et de l'écoulement aérodynamique extérieur, elles ne produisent que peu d'effet dans la réduction du bruit de cellule de choc.

Par ailleurs, le document EP-1 703 114 décrit un turbomoteur à bruit réduit dans lequel une pluralité de bossages sont répartis à la périphérie de l'orifice de sortie du flux froid en faisant saillie dans ce dernier, chacun desdits bossages formant un convergent suivi d'un divergent raccordé au bord dudit orifice de sortie du flux froid.

L'objet de la présente invention est de perfectionner de tels bossages pour permettre non seulement une atténuation du bruit de jet, mais encore une réduction du bruit de cellule de choc.

L'invention est définie dans les revendications adjointes.

Grâce à la présente invention, la périphérie dudit flux froid est soumise, à la sortie de la tuyère correspondante, à une division en jets distincts d'orientations et de structures différentes, selon que lesdits jets passent sur les bossages ou dans les canaux longitudinaux se trouvant entre lesdits bossages. En effet, les jets de flux froid passant dans lesdits canaux longitudinaux ont une direction prolongeant ledit capot externe de soufflante et présentent, au bord dudit orifice de sortie du flux froid, une valeur d'accélération égale à la valeur nominale de la tuyère. En revanche, les jets de flux froid passant sur les bossages sont dirigés vers l'extérieur, en prolongement dudit divergent, et pénètrent dans l'écoulement aérodynamique autour du turbomoteur. De plus, ils présentent, au bord dudit orifice de sortie du flux froid, une accélération très supérieure à ladite valeur nominale du fait d'une détente plus grande due auxdits bossages.

Par ailleurs, du fait de la présence desdites faces latérales planes, on engendre un fort cisaillement entre les jets de flux froid passant sur les bossages et ceux traversant lesdits canaux longitudinaux, ce qui provoque la formation de tourbillons favorisant le mélange entre l'écoulement aérodynamique extérieur et ledit flux froid. L'orientation desdites faces latérales planes peut par exemple être radiale, par rapport audit turbomoteur.

Ainsi, lesdits bossages conformes à la présente invention :
- induisent des hétérogénéités radiales dans le champ de pression du flux froid à la sortie de la tuyère de soufflante, c'est-à-dire qu'ils désorganisent localement la structure dudit flux foid, ce qui entraîne à l'arrière du turbomoteur une réduction de l'intensité des cellules de chocs et donc de l'amplitude des oscillations de vitesse ; et, simultanément,
- favorisent le mélange entre le flux froid et l'écoulement aérodynamique autour du turbomoteur, ce qui entraîne une réduction du bruit de jet.

Les bossages conformes à la présente invention permettent donc d'influer, à la fois, sur la turbulence (source de bruit) et sur les cellules de chocs (amplification de ce bruit).

De préférence, lesdits bossages sont régulièrement répartis à la périphérie dudit capot externe de soufflante. Ils peuvent de plus présenter une largeur périphérique égale à celle desdits canaux longitudinaux.

Lesdits bossages peuvent être conformés avec ledit capot externe de soufflante pour en être une partie intégrante. Toutefois, avantageusement, lesdits bossages sont des pièces rapportées et fixées audit capot externe de soufflante. Ainsi, il est possible de perfectionner selon l'invention non seulement les turbomoteurs en cours de construction, mais encore ceux antérieurement construits.

Les figures du dessin annexé feront bien comprendre comment l'invention peut être réalisée. Sur ces figures, des références identiques désignent des éléments semblables.
La figure 1 représente, en coupe axiale schématique, un turbomoteur perfectionné selon la présente invention.
La figure 2 illustre, en vue schématique partielle agrandie, la partie arrière de la tuyère de flux froid du turbomoteur de la figure 1.
La figure 3 est une vue de l'arrière, schématique et partielle, de la tuyère de la figure 2, vue selon la flèche III des figures 1 et 2.
La figure 4 illustre schématiquement le processus selon lequel les bossages conformes à la présente invention améliorent le mélange de flux à la sortie de la tuyère de flux froid.
La figure 5 illustre schématiquement le processus selon lequel les bossages conformes à la présente invention déstructurent le flux froid.
La figure 6 est un schéma indiquant, pour un moteur connu et pour ce même moteur connu perfectionné selon l'invention, la variation de
pression P à l'arrière dudit moteur, en fonction de la distance d le long de l'axe de ce dernier.

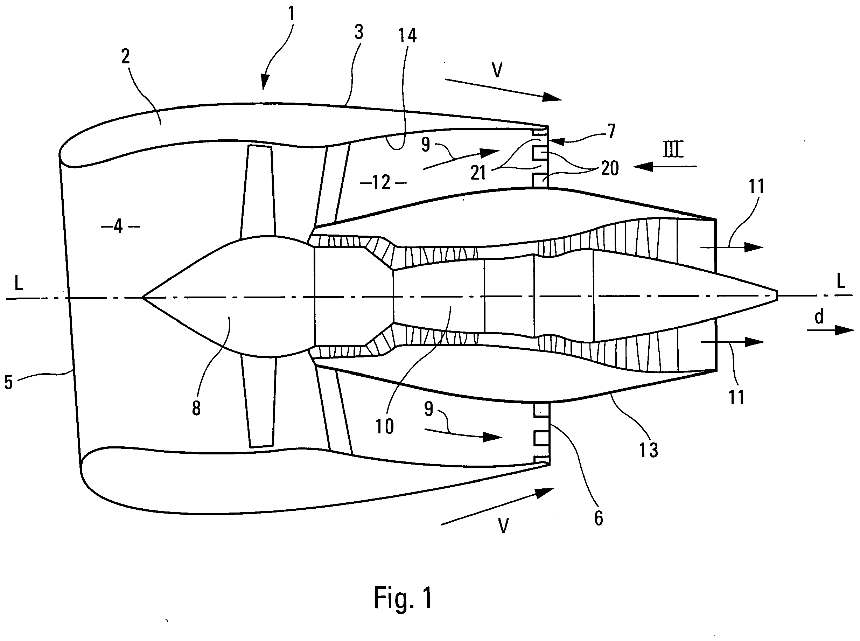

Le turbomoteur à double flux 1, d'axe longitudinal L-L et montré sur la figure 1, comporte une nacelle 2 délimitée extérieurement par un capot externe de nacelle 3.

La nacelle 2 comporte, à l'avant, une entrée d'air 4 pourvue d'un bord d'attaque 5 et, à l'arrière, un orifice de sortie d'air 6 pourvu d'un bord de fuite 7.

A l'intérieur de ladite nacelle 2, sont disposés :
- une soufflante 8 dirigée vers l'entrée d'air 4 et apte à engendrer le flux froid 9 pour le turbomoteur 1 ;
- un générateur central 10, comprenant de façon connue des compresseurs à basse et haute pression, une chambre de combustion et des turbines à basse et haute pression, et engendrant le flux chaud 11 dudit turbomoteur 1 ; et
- un canal annulaire de flux froid 12, ménagé autour dudit générateur central 10, entre un capot interne de soufflante 13 et un capot externe de soufflante 14.

Le capot externe de soufflante 14 forme une tuyère pour le flux froid et converge, vers l'arrière du turbomoteur 1, en direction dudit capot externe de la nacelle 3, pour former avec celui-ci le bord 7 dudit orifice 6, qui constitue donc l'orifice de sortie du flux froid.

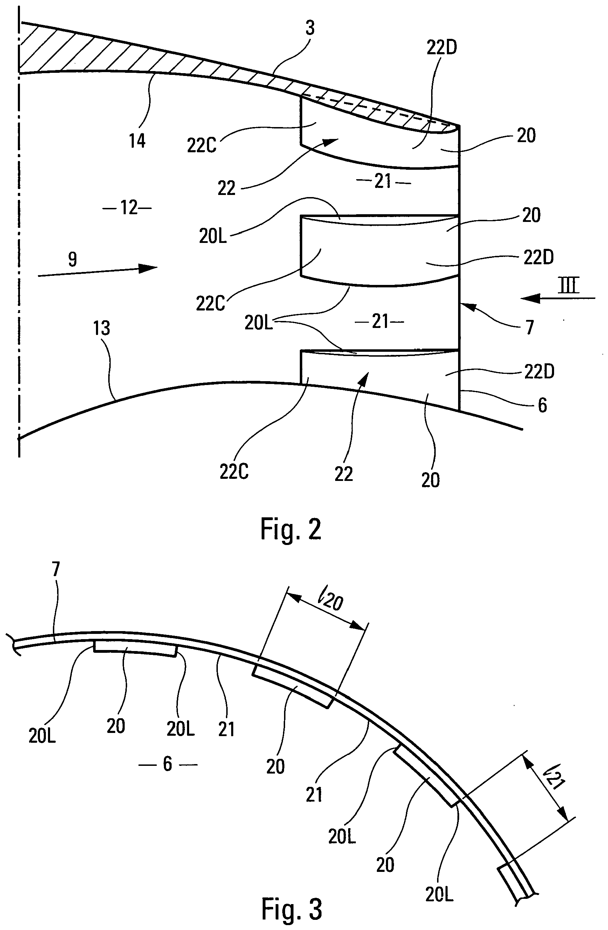

Au voisinage dudit orifice 6 de sortie du flux froid 9, le turbomoteur 1 comporte une pluralité de bossages 20 (voir également les figures 2 et 3) régulièrement répartis à la périphérie du capot externe de soufflante 14. Les bossages 20 font saillie dans le canal annulaire de flux froid 12 et délimitent entre eux des canaux longitudinaux 21. De préférence, les bossages 20 sont des pièces rapportées et fixées audit capot externe de soufflante 14, par tout moyen connu (non représenté) tel que soudure, vis, etc ...

Chaque bossage 20 présente une face convexe 22 formant, pour le flux froid 9, un convergent 22C dirigé vers l'avant suivi d'un divergent 22D dirigé vers l'arrière. De plus, la partie arrière de chaque divergent 22D est raccordée au bord de fuite 7 de l'orifice 6.

Comme on peut le voir sur les figures 2 et 3, chaque bossage 20 comporte deux faces latérales planes 20L, longitudinales par rapport au turbomoteur 1, et la face convexe 22 et lesdites faces latérales 20L confèrent à chaque bossage 20 une section au moins approximativement rectangulaire, évolutive parallèlement audit axe longitudinal L-L.

Les faces latérales planes 20L peuvent être radiales, c'est-à-dire qu'alors leurs plans passent par ledit axe longitudinal L-L. De plus, la largeur périphérique ℓ20 des bossages 20 peut être égale à la largeur périphérique ℓ21 des canaux longitudinaux 21.

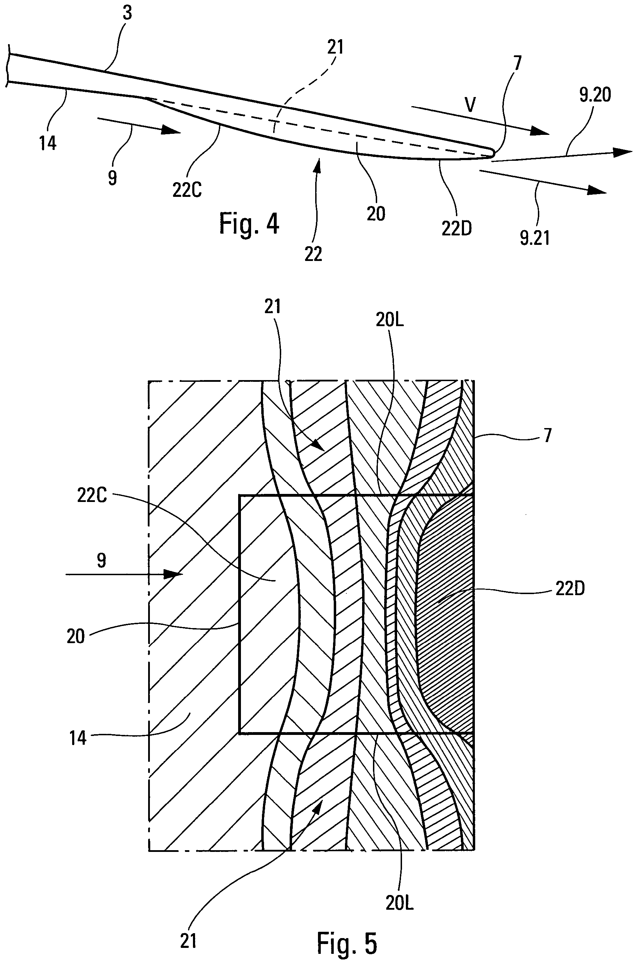

Lorsque l'aéronef (non représenté) qui porte le turbomoteur 1 se déplace, un écoulement aérodynamique V s'écoule autour de la nacelle 2, au contact du capot externe de nacelle 3 (voir les figures 1 et 4). Par ailleurs, comme l'illustre la figure 4, à la périphérie du flux froid 9, des jets 9.20 de celui-ci passent sur les bossages 20, alors que d'autres jets 9.21 dudit flux froid passent entre lesdits bossages, à travers les canaux longitudinaux 21.

Bien entendu, à la sortie de l'orifice de fuite 6, les jets 9.21 sont dirigés en prolongement du capot externe de soufflante 14, alors que les jets 9.20 sont dirigés en prolongement des divergents 22D des bossages 20. Ainsi, les jets 9.20 croisent plus rapidement l'écoulement aérodynamique V que les jets 9.21. Il en résulte une meilleure pénétration du flux froid 9 dans l'écoulement aérodynamique V, et donc un meilleur mélange de ce dernier avec ledit flux froid 9. Le bruit de jet est donc réduit.

Par ailleurs, comme cela est illustré par la figure 5, les jets 9.20 du flux froid 9 passant sur les convergents-divergents 22C-22D présentent, au bord de fuite 7, une accélération très supérieure à celle des jets 9.21 passant dans les canaux longitudinaux 21, entre les bossages 20. Sur la figure 5, on a représenté en plan un bossage 20 avec la partie de capot externe de soufflante 14 l'entourant, ainsi que des zones hachurées d'iso accélération du flux froid 9 (ces zones d'iso accélération résultent d'essais et sont d'autant plus sombres que l'accélération est plus élevée).

De la différence des accélérations des jets 9.20 et 9.21 à la sortie de l'orifice 6, il résulte que, au moins à la périphérie, le flux froid 9 est déstructuré, de sorte que les cellules de choc de bruit sont réduites.

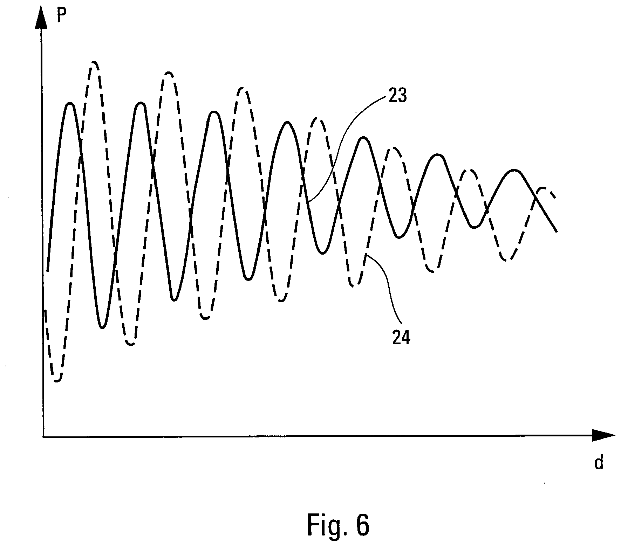

Cette conséquence est illustrée par la figure 6.

Sur cette figure 6, on a représenté des résultats d'essais sur un turbomoteur équipant un avion long-courrier. Cette figure 6 est un diagramme indiquant les oscillations de pression P à l'arrière du turbomoteur en fonction de la distance d à celui-ci.

La courbe 23 en trait plein de la figure 6 correspond audit turbomoteur perfectionné selon l'invention en fixant 36 bossages 20 équirépartis à la périphérie de l'orifice de sortie de son capot externe de soufflante, de façon à fournir autant de canaux longitudinaux 21 de même largeur périphérique que lesdits bossages, chacun de ces derniers ayant une longueur de l'ordre de 200 mm.

En revanche la courbe 24 en pointillés de la figure 6 correspond au même turbomoteur non perfectionné selon l'invention.

Par comparaison des courbes 23 et 24, on peut constater que la présente invention permet de réduire d'environ 20% l'amplitude de ces oscillations de pression.

## Revendications

1. Turbomoteur à double flux pour aéronef comportant, autour de son axe longitudinal (L-L):
- une nacelle (2) pour vue d'un capot externe de nacelle (3) et enfermant une soufflante (8) engendrant le flux froid (9) et un générateur central (10) engendrant le flux chaud (11) ;
- un canal annulaire de flux froid (12) ménagé autour dudit générateur central de flux chaud (10) ;
- un: capot externe de soufflante (14) délimitant ledit canal annulaire de flux froid (12) du côté dudit capot externe de nacelle (3) ;
- un orifice de sortie du flux froid (6), dont le bord (7), qui forme le bord de fuite de ladite nacelle (2), est déterminé par ledit capot externe de nacelle (3) et par tendit capot externe de souffrante (14) convergeant l'un vers l'autre jusqu'à se rejoindre; et
- au voisinage dudit orifice de sortie du flux froid (6), une pluralité de bossages (20) répartis à la périphérie dudit capot externe de soufflante (14) en faisant saillie dans ledit canal annulaire de flux froid (12) en délimitant entre eux des canaux longitudinaux (21), et en formant, pour ledit flux froid (9), un convergent suivi d'un divergent raccordé au bord (7) dudit orifice de sortie du flux froid (6), chaque bossage (20) présentant une face convexe (22) formant ledit convergent (22C) et ledit divergent (22D) et deux faces latérales (20L) planes, longitudinales par rapport audit turbomoteur, ladite face convexe (22) et lesdites fasces latérales (20L) conférant audit bossage (20) une section évolutive parallèlement audit axe longitudinal (L-L), **caractérisé en ce que** ladite face connexe (22) et lesdites faces latérales (20L) confèrent audit brossage (20) une section au moins approximativement rectangulaire.

2. Turbomoteur selon la revendication 1,
**caractérisé en ce que** lesdits bossages (20) sont régulièrement répartis à la périphérie dudit capot externe de soufflante (14).

3. Turbomoteur selon l'une des revendications 1 ou 2,
**caractérisé en ce que** la largeur périphérique (ℓ20) des bossages (20) est égale à la largeur périphérique (ℓ21) desdits canaux longitudinaux (21).

4. Turbomoteur selon l'une des revendications 1 à 3,
**caractérisé en ce que** lesdits bossages (20) sont des pièces rapportées et fixées audit capot externe de soufflante (14).

## Patentansprüche

1. Zweistrahl-Turbinentriebwerk für ein Luftfahrzeug, umfassend um seine Längsachse (L-L):
- eine Gondel (2), die mit einer Gondelaußenkappe (3) versehen ist und ein Gebläse (8), das den kalten Strom (9) erzeugt, und einen zentralen Generator (10), der den heißen Strom (11) erzeugt, einschließt,
- einen ringförmigen Kaltstromkanal (12), der um den zentralen Generator eines heißen Stroms (10) angeordnet ist;
- eine Gebläseaußenkappe (14), die den ringförmigen Kaltstromkanal (12) auf der Seite der Gondelaußenkappe (3) begrenzt;
- eine Austrittsöffnung für den kalten Strom (6), deren Rand (7), der die Hinterkante der Gondel (2) bildet, durch die Gondelaußenkappe (3) und durch die Gebläseaußenkappe (14), die zueinander konvergierend sind, bis sie sich verbinden, bestimmt ist; und
- in der Nähe der Austrittsöffnung des kalten Stroms (6) eine Vielzahl von Erhebungen (20), die an der Peripherie der Gebläseaußenkappe (14) verteilt sind, wobei sie in den ringförmigen Kaltstromkanal (12) hineinragen, wobei sie zwischen sich Längskanäle (21) begrenzen, und wobei für den kalten Strom (9) eine Verjüngung, gefolgt von einer Erweiterung, die an den Rand (7) der Austrittsöffnung des kalten Stroms (6) angeschlossen ist, wobei jede Erhebung (20) eine konvexe Fläche (22), die die Verjüngung (22C) und die Erweiterung (22D) bildet, und zwei ebene Seitenflächen (20L), die in Bezug zum Turbinentriebwerk längs ausgerichtet sind, aufweist, wobei die konvexe Fläche (22) und die Seitenflächen (20L) der Erhebung (20) einen parallel zur Längsachse (L-L) evolutiven Querschnitt verleiht,
**dadurch gekennzeichnet, dass** die konvexe Fläche (22) und die Seitenflächen (20L) der Erhebung (20) einen zumindest annähernd rechteckigen Querschnitt verleihen.

2. Turbinentriebwerk nach Anspruch 1, **dadurch gekennzeichnet, dass** die Erhebungen (20) regelmäßig an der Peripherie der Gebläseaußenkappe (14) verteilt sind.

3. Turbinentriebwerk nach einem der Ansprüche 1 oder 2, **dadurch gekennzeichnet, dass** die periphere Breite (120) der Erhebungen (20) gleich der peripheren Breite (121) de Längskanäle (21) ist.

4. Turbinentriebwerk nach einem der Ansprüche 1 bis 3, **dadurch gekennzeichnet, dass** die Erhebungen (20) auf der Gebläseaußenkappe (14) aufgesetzte und befestigte Teile sind.

## Claims

1. A bypass turbojet engine for an aircraft, comprising, around its longitudinal axis (L-L):
- a nacelle (2) provided with a nacelle outer cowl (3) and containing a fan (8) generating the cold flow (9) and a central generator (10) generating the hot flow (11);
- an annular cold flow duct (12) created around said central hot flow generator (10);
- a fan outer cowl (14) delimiting said annular cold flow duct (12) on said nacelle outer cowl (3) side;
- a cold flow outlet orifice (6) of which the edge (7), which forms the trailing edge of said nacelle (2), is determined by said nacelle outer cowl (3) and by said fan outer cowl (14) converging toward one another until they meet; and
- in the vicinity of said cold flow outlet orifice (6), a plurality of bosses (20) distributed at the periphery of said fan outer cowl (14), projecting into said annular cold flow duct (12), delimiting between them longitudinal ducts (21) and forming, for said cold flow (9), a convergent followed by a divergent connected to the edge (7) of said cold flow outlet orifice (6), each boss (20) having a convex face (22) forming said convergent (22C) and said divergent (22D) and two planar lateral faces (20L), which run longitudinally with respect to said turbojet engine, said convex face (22) and said lateral faces (20L) giving said boss (20) a cross section that evolves in a direction parallel to said longitudinal axis (L-L),
**characterized in that** said convex face (22) and said lateral faces (20L) give said boss (20) an at least approximately rectangular cross section.

2. The turbojet engine as claimed in claim 1, **characterized in that** said bosses (20) are uniformly distributed at the periphery of said fan outer cowl (14).

3. The turbojet engine as claimed in one of claims 1 and 2,
**characterized in that** the peripheral width (ℓ20) of the bosses (20) is equal to the peripheral width (ℓ21) of said longitudinal ducts (21).

4. The turbojet engine as claimed in one of claims 1 to 3,
**characterized in that** said bosses (20) are components that are added on and attached to said outer fan cowl (14).
